# EUROPEAN PATENT SPECIFICATION

(11) **EP 3 599 873 B1**
(45) Date of publication and mention of the grant of the patent: **30.06.2021**
(21) Application number: 18711561.3
(22) Date of filing: 16.03.2018
(51) Int. Cl.: A22B 5/00, A47L 9/06, B08B 5/04

(54) **METHOD AND SYSTEM FOR ASPIRATING LOOSE MATERIAL FROM A MEAT SURFACE**
VERFAHREN UND VORRICHTUNG ZUM ABSAUGEN VON LOSEM MATERIAL AUS EINER FLEISCHOBERFLÄCHE
PROCÉDÉ ET DISPOSITIF POUR ASPIRER DES MATÉRIAUX DÉTACHÉS DE LA SURFACE DE LA VIANDE

(30) Priority: 20.03.2017 DK PA201700196
(43) Date of publication of application: 05.02.2020
(73) Proprietor: Teknologisk Institut, 2630 Taastrup (DK)
(72) Inventor: JENSEN, Carsten, 2630 Taastrup (DK); HENCKEL, Jacob Torstein, 2630 Taastrup (DK)
(86) International application number: PCT/EP2018/056695
(87) International publication number: WO 2018/172214

(56) References cited:
- EP-A1- 0 679 335
- WO-A1-02/26045
- AU-A- 4 967 664
- US-A- 4 649 594
- US-A- 5 632 670
- US-A1- 2009 188 117

## Description

The invention relates to a system and method for removing undesirable material from a surface of a carcass or parts hereof such as from meat product. Undesirable material may be bone fragments, meat/fat/tendon fragments and/or foreign bodies. The system is based on vacuum to aspirate undesirable material and is preferably used without steam or water.

### Background of invention

To increase food safety and food quality there is an increasing focus on minimizing and/or removing undesirable material from carcasses or parts thereof under treatment in the food processing industry. Some cleaning of carcasses or parts thereof (hereinafter denoted 'meat product') may be performed by a combination of applying steam or water to the meat product and aspirating the steam or water together with impurities and other undesirable materials, hereby cleaning the meat product. Thus EP 679335 describes a hand-held carcass cleaning system designed for removing contaminants by simultaneous vacuum and spraying cleaning liquids.

However, some meat products should not be exposed to steam or water for a number of reasons such as 1) the meat should be kept dry to have a high quality, 2) water is undesirable as this may result in problems such as difficulties in the packaging process, 3) handling water increases the costs, 4) water may increase growth of microorganisms.

A suction device for automatic dry suction of meat is known from DK 177163. This suction device has a number of drag heads located with distance between each other. The drag heads can be located in one row or in more than one row to make it possible to aspirate e.g. bone fragments from a pork breast/belly piece just by passing the suction device past the breast/belly piece one time when the breast/belly piece are transported by a conveyor belt past the suction device i.e. the group of drag heads should create a width corresponding to the width of the transported meat pieces, where the 'width' correspond to the meat product's dimension perpendicular to the transport direction. Each drag head is movable suspended such that the drag head can move up and down according to the surface variation of the breast/belly piece. However, it has been observed that the quality of treated meat pieces are not sufficient as too many bone fragments, other loose fragments origination from the carcass and also too many foreign bodies are left on the meat pieces after treatment. Although the drag heads show some mechanical flexibility, it has turned out that this flexibility is not sufficient to obtain the required meat product quality and the system is not suitable for an automatic vacuum cleaning system comprising an industrial robot.

### Summary of invention

The invention relates to a vacuum cleaner for aspirating undesirable material from a surface of a meat product, where such undesirable material may be any fragments existing from the processing of a carcass or parts hereof or the fragments may be foreign bodies located on the meat product.

The vacuum cleaner for aspirating undesirable material from a surface of a meat product comprises a drag head, which comprises:
a. A drag head body,
b. An aspiration opening in the drag head body,
c. At least one spacer with a resting area, the spacer being connected to the drag head body in front of and/or alongside the aspiration opening and with the resting area located away from the aspiration opening such that the resting area can rest on a meat product surface during application,
d. At least one slide shoe with a sliding part comprising a first sliding area, the slide shoe being arranged besides the drag head body such that at least part of the first sliding area is substantially parallel to at least a part of the resting area of the spacer, and
wherein the slide shoe is movable in a direction substantially perpendicular to the resting area of the spacer.

The slide shoe may also comprise the following features:
- A fixing arm connected to a sliding part with the sliding areas,
- The slide shoe being located beside at least one of the drag heads without being fastened directly to the drag head such that the slide shoe is capable of performing a resilient movement perpendicular to the transport direction during application,
- The slide shoe having a total length being at least twice the length of the resting area of the spacer,
- The slide shoe having a first sliding area being parallel to the resting area of the spacer and a second sliding area in a first end of the first sliding area and a third sliding area in a second end of the first sliding area,
- The second sliding area and the third sliding area being slightly bending towards the fixing arm and
- The total length of the sliding part being at least 6 cm, such as between 9 and 11 cm.

An aspiration means for a vacuum cleaner for aspirating undesirable material from a meat product may comprise
a. at least one drag head, such as at least two drag heads,
b. at least one drag head coupling for connecting the at least one drag head to at least one suction tube,
c. at least one fixing bar for joining a number of suction tubes each connected to a drag head and/or for joining a number of drag heads,
d. at least one management coupling for connecting the at least one drag head each with a suction tube to a management system, such as an automatic management system, such as an industrial robot.

In the aspiration means:
- The slide shoe may comprising a fixing arm being fixed to the fixing bar, to the suction tube or to the drag head by a pivot making the slide shoe capable of performing a resilient movement,
- The fixing bar may be fixed in a non-moving position holding the at least one, such as at least two drag heads or suction tubes next to each other and with a predetermined distance between the at least two drag heads or suction tubes,
- The fixing bar may be located above the at least one, such as at least two drag heads or suction tubes, where above is determined in respect of the location during application on a horizontally located meat piece,
- The at least one, such as at least two drag heads or suction tubes may be connected to the fixing bar by a resilient connection such that each of the at least one, such as at least two drag heads or suction tubes are capable of resilient movement perpendicular to the movement direction during application.

An automatic vacuum cleaning system for aspirating undesirable material from a meat product may comprise at least one aspiration means and a management system such as an industrial robot, at least one trigger system for determining and signaling presence of a meat product to be treated, and a processor comprising an algorithm determining the movement pattern of the at least one drag head during treatment of the meat product.

In a method for removing loose material from the surface of a carcass or meat piece, the method comprises the steps of of
a. Providing an aspiration means or an automatic vacuum cleaning system,
b. Positioning a carcass or meat piece at a handling area in proximity to the aspiration means or of the automatic vacuum cleaning system and
c. Removing loose material from the surface of the carcass or meat piece by guiding the at least one drag head one or more times along the surface of the carcass or meat piece with a vacuum suction in the drag head and hereby removing loose material from the surface of the carcass or meat piece.

### Brief description of figures

- Fig. 1: illustrates a drag head observed from a first angle.
- Fig. 2: illustrates a drag head observed from a second angle.
- Fig. 3: illustrates a drag head observed from a third angle.
- Fig. 4: illustrates a slide shoe.
- Fig. 5: illustrates an aspiration means with 5 drag heads.
- Fig. 6: illustrates an aspiration means with 6 drag heads.
- Fig. 7: illustrates an automatic vacuum cleaning system.

### Detailed description of the invention

An aspect of the invention relates to a drag head system for a vacuum cleaner such as an automatic vacuum cleaner for aspirating undesirable material from a surface such as from a surface of a meat product, the drag head system comprises:
a. A drag head body with an aspiration opening or inlet opening for letting in air and loose or unattached material such as loose undesirable material on a meat piece surface,
b. At least one spacer with a resting area, the spacer being connected to the drag head body in front of and/or alongside the aspiration opening and with the resting area located away from the aspiration opening such that the resting area can rest on a meat product surface during application,
c. At least one slide shoe with a sliding part comprising a first sliding area, the slide shoe being arranged besides the drag head body such that at least part of the first sliding area is substantially parallel to at least a part of the resting area of the at least one spacer,
wherein the slide shoe is independently movable in a direction substantially perpendicular to the resting area of the spacer.

The purpose of the spacer is to create a space or distance between the aspiration opening of the drag head body and a meat product surface during application when air is aspirated through the drag head body. The spacer will secure the drag head body will not adhere to the surface of a meat product and this secures sufficient air transport into the drag head body making it capable of aspirating into the drag head body loose and unattached material located on the meat product surface. The purpose of the slide shoe is to secure any part of the meat piece do not flip around part of the drag head body as this may decrease and/or interrupt the air flow during the aspiration process such that some items of loose or unattached material on the meat product surface are not removed from the surface. The slide shoe may be independently movable in a direction substantially perpendicular to the resting area of the spacer, this also means movable substantially towards the aspiration opening, or substantially perpendicular to the direction of transport during application, or movable in a direction away from the meat piece surface which is under treatment. This independently movement makes the slide shoe capable of following the contour of the surface of the meat piece.

The drag head body may also comprise:
- A drag head housing with an outline which is a truncated cylinder,
- The truncation of the drag head housing constitute the aspiration opening,
- The even planes of the truncated cylinder comprises side parts of the drag head body and
- An outlet opening substantially opposite of the aspiration opening or in-let opening.

The drag head body may have any other suitable outline, such as V-shaped and which is oblong in a direction perpendicular to the overall air-flow direction through the drag head body i.e. the drag head body is preferably not cone-shaped. The large part of the V-shaped drag head body may include an aspiration opening and the smallest part of the V-shaped drag head body may comprise an outlet opening, or vice-versa. Preferably the drag head body has even planes as side parts of the drag head body, these even side parts make it possible to use more drag head bodies to design an aspiration means as described elsewhere herein.

The aspiration opening of the drag head body may comprise the following features:
- It is a four-sided opening when observed perpendicularly to a rectangle produced from the sides of the opening,
- Each side along the aspiration opening is in similar level,
- It is preferably squared or rectangular when observed in the direction of the air flow during aspiration.
- It has a length of between 5 and 50 mm, such as between 10 and 40 mm, e.g. between 15 and 30 mm, such as between 20 and 25 mm, e.g. about 22 mm, and wherein the length is parallel to the transport direction during application of the drag head,
- It has a width of between 100 and 10 mm, such as between 90 and 15 mm, e.g. between 80 and 20 mm, such as between 70 and 25 mm, e.g. between 60 and 25 mm, such as between 50 and 30 mm, e.g. between 45 and 35 mm, such as about 40 mm, and wherein the width is perpendicular to the transport direction during application of the drag head, and substantially parallel to a meat product surface being treated,
- The aspiration opening is divided into a number of sub-openings by the at least one spacer and wherein the sub-openings each has a length corresponding to the length of the aspiration opening,
- The sub-openings each has a width which is less than half the width of the aspiration opening and the width of the sub-openings is between 4 and 20 mm, such as between 5 and 17 mm, e.g. between 6 and 15 mm, such as between 7 and 13 mm, e.g. between 8 and 11 mm, such as between 8 and 10 mm, e.g. about 9 mm.
- The distance between each two spacers is preferably such that the meat product surface is not drawn towards the aspiration opening to an extent adversely reducing the aspiration effect during application of the drag head.

The spacer of the drag head may comprise the following features:
- The resting area is preferably plane or the end parts of the resting area bend slightly towards the aspiration opening of the drag head body when the spacer is mounted on the drag head body,
- The resting area preferably has a length corresponding at least to the aspiration opening length,
- The spacer is at least 2 mm in height, such as at least 4 mm, e.g. at least 6 mm, such as at least 8 mm, e.g. at least 10 mm, creating substantially a corresponding height of space between the aspiration opening and a meat product surface during application,
- The spacer has at least one rounded part located along and outside of a rounded part of the drag head body, the at least one rounded part of the spacer bending away from a meat product surface during application.
- The rounded part of the spacer may at one end of the spacer encircle the drag head body substantially ⅓ to ½ the way from the aspiration opening to a top point of the drag head body. The rounded part of the spacer may at the other end of the spacer encircle the drag head body substantially ⅓ to ²/₃ preferably ½ to ²/₃, the way from the aspiration opening to a top point of the drag head body. However, the spacer may also fully encircle the drag head body or may follow the drag head body to a location where an outlet of the drag head is located.

The slide shoe may comprise the following features:
- The slide shoe comprises a fixing arm connected to a sliding part with the sliding areas, and where the fixing arm is used to attach the slide shoe to an aspiration means,
- The slide shoe may be located beside at least one drag head without being fastened directly to the drag head and such that the slide shoe is capable of performing a resilient movement perpendicular to the transport direction during application, this movement direction is also parallel to a side of the drag head body,
- Each slide shoe may move independently of the drag head(s) of an aspiration means,
- The sliding part of the slide shoe has a total length being at least twice the length of the resting area of the spacer, such as substantially three times the length of the resting area,
- The sliding part of the slide shoe has a first sliding area being substantially parallel to the resting area of the spacer and a second sliding area in a first end of the first sliding area and a third sliding area in a second end of the first sliding area,
- The second sliding area and the third sliding area are slightly bending towards the fixing arm such that the total sliding area of the first, second and third sliding area is an smooth curve, which bends upward in respect to the first sliding area when observing the slide shoe in a side view and upward in respect to when the slide shoe rests on the upper side of a meat piece being located horizontally,
- The total length of the sliding part may be at least 6 cm, such as at least 7 cm, e.g. at least 8 cm, such as at least 9 cm, e.g. at least 10 cm, such as between 9 and 11 cm, e.g. substantially about 10 cm,
- The slide shoe may be arranged beside a spacer such that substantially the same length of the sliding part protrudes in each direction of the spacer i.e. in a first end and in a second end of the spacer according to the transport direction during application,
- The second sliding are and the third sliding area of the slide shoe may each extend at least 1 cm from the resting area of the spacer, such as at least 2 cm, e.g. at least 3 cm, such as at least 4 cm, e.g. at least 3 cm, and where the second sliding area and the third sliding area need not extend a similar length from the resting area of the spacer.

The number of slide shoes is preferably equal to the number of drag heads added by one, such that each drag heads has slide shoes located at both sides.

Another aspect of the invention relates to an aspiration means for a vacuum cleaner for aspirating undesirable material from a meat product, the aspiration means comprising:
a. at least one drag head as described herein, such as at least two drag heads,
b. at least one drag head coupling for connecting each of the at least one drag head to at least one suction tube,
c. at least one fixing bar for joining a number of drag heads or suction tubes each connected to a drag head,
d. at least one management coupling for connecting the at least one drag head each with a suction tube to a management system, such as an automatic management system such as an industrial robot, and
e. at least one suction tube joint for joining two sections of suction tubes.

The vacuum cleaner may be an automatic vacuum cleaner, such as a robot controlled vacuum cleaner. The robot may be an industrial robot capable of controlling the location of the aspiration means in three dimensions.

The aspiration means may have a design, wherein:
- The at least one slide shoe comprises a fixing arm being fixed to the fixing bar, to the suction tube or to the drag head by a pivot making the slide shoe capable of performing a resilient movement, such as a resilient movement being independently of the movement of the drag head during application,
- The fixing bar may be fixed in a non-moving position holding the at least one drag head or suction tube, such as the at least two drag heads or suction tubes next to each other and with a predetermined distance between the at least two drag heads or suction tubes,
- The fixing bar may be located above the at least one, such as at least two drag heads or suction tubes, where above is in respect to the orientation of the aspiration means during application on the upper side of a horizontally located meat piece,
- The at least one, such as at least two drag heads or suction tubes being connected to the fixing bar by a resilient connection such that each of the at least one, such as at least two suction tubes are capable of resilient movement perpendicular to the movement direction during application,
- The at least one coupling for connecting the at least one drag head to a management system being located at the fixing bar,

The drag heads of the aspiration means may be independently movable such that the drag heads may follow the contour of a meat piece during application.

A further aspect of the invention relates to an automatic vacuum cleaning system for aspirating undesirable material from a meat product, the automatic vacuum cleaning system comprises at least one aspiration means as described herein and a management system such as an industrial robot, at least one trigger system for determining and signaling presence of a meat product to be treated, and a processor comprising an algorithm determining the movement pattern of the at least one drag head during treatment of the meat product.

The trigger system may be a system which in a simple way determines presence or absence of a meat piece product in a treatment zone or handling area. When a meat piece product is present in such a treatment zone or handling area the automatic vacuum cleaning system may aspirate undesirable material from the surface of the meat product. The movement of the vacuum cleaning system may be in a predetermined path. The trigger signal may cause the automatic system to direct the aspiration means to a predetermined location in space corresponding to an end of a meat piece to be treated and from which location the aspiration means is handled in a predetermined path securing the aspiration means is passed over the meat product surface in one or more movements to aspirate loose material from the surface of the meat product.

The trigger system may also be a system comprising a vision system which is capable of determine the presence of a meat piece in a treatment zone or handling area and e.g. also the positioning and/or the orientation and/or the length and/or the width and/or the height of the meat piece. Information from a vision system may be used to determine the movement path of the vacuum cleaning system e.g. including determination of whether the meat piece is non-moving or moving e.g. by a conveyor belt.

Another aspect of the invention relates to a method for removing loose material from the surface of a carcass or from the surface of a meat piece, the method comprising the steps of
a. Providing an aspiration means as described herein or an automatic vacuum cleaning system as described herein,
b. Positioning a carcass or meat piece in a treatment zone or handling area in proximity to the aspiration means or of the automatic vacuum cleaning system and
c. Removing loose material from the surface of the carcass or meat piece by guiding the at least one drag head one or more times along the surface of the carcass or meat piece with a vacuum suction in the drag head and hereby removing loose material from the surface of the carcass or meat piece.

A meat piece surface may be treated a predetermined number of times by the at least one drag head or aspiration means and the number of times may be dependent on the required quality of the meat piece i.e. the allowed number or amount of undesirable material, such as number or amount of bone fragments. Preferably the at least one drag head is only guided one time pass a section of the surface of a carcass or of a meat piece, however, the at least one drag head or aspiration means may have a dimension which is not sufficient to bridge the meat piece and thus not capable in just one go to treat the entire meat piece surface which should be treated, in such a situation the at least one drag head may be guided along the surface to be treated a number of times and such that at least an untreated area of the meat piece surface is treated in each round. Partly overlap between treated areas may occur when treating a meat piece surface by passing the at least one drag head or aspiration means along a meat product in two or more rounds.

A further aspect of the invention relates to use of at least one drag head as described herein, of an aspiration means as described herein or of an automatic vacuum cleaner as described herein, such as for use in the method as described herein.

Preferably the at least one drag head, aspiration means or automatic vacuum cleaner is used for removal of undesirable material from the surface of a carcass or from the surface of a meat piece. Undesirable material may be any loose material being present on the surface of a carcass or on the surface of a meat piece. Preferably the meat piece is a meat piece which has been treated by a cutting means such as a knife or a saw and where there is a risk of fragments of bones or cartilage on the surface of the meat piece. Preferred meat pieces to treat are belly pieces or breast prices from pig, cattle/cow, sheep, goats, deer etc A meat piece should be understood as any part of an animal carcass.

### Detailed description of the figures

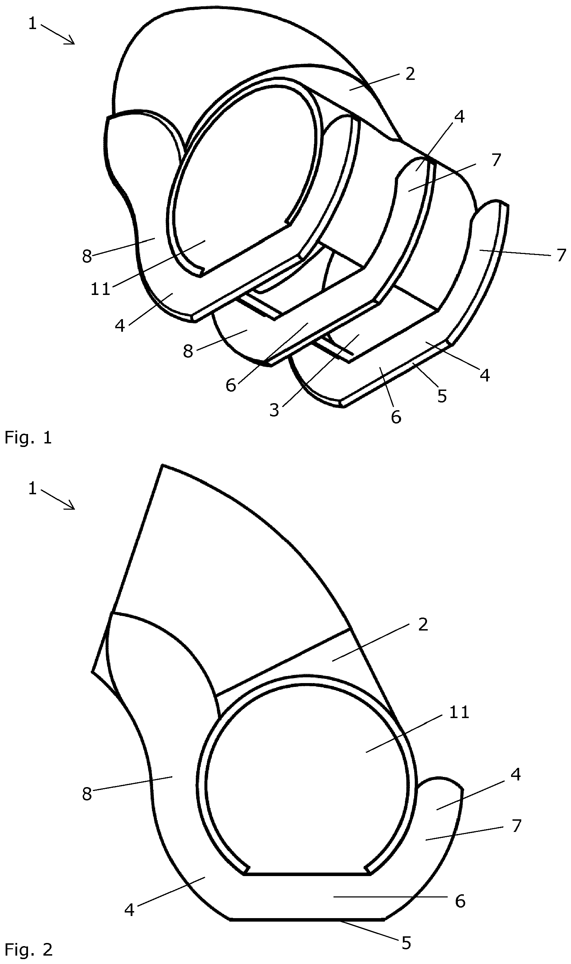

Fig. 1 illustrates a of a drag head (1) from a first angle. The drag head (1) comprises a drag head body (2) with a drag head housing (11) with an aspiration opening (3) to aspirate loose material. To make a distance from the aspiration opening (3) a number of spacers (4) are located at the flank of the aspiration opening (3) and/or passing the opening of the aspiration opening (3). Each spacer (4) has a resting area (5) suitable to rest on the surface of a meat product and the height of the first spacing section (6), the second spacing section (7) and the third spacing section (8) of the spacer (4) creates space for airflow during vacuuming, secure an optimal turbulence of the air at the surface of the meat product and participate in securing the meat product does not stick to the drag head (1) during application.
Fig. 2 illustrates a drag head (1) observed from a second angle. Further description is present in the description of Fig. 1.

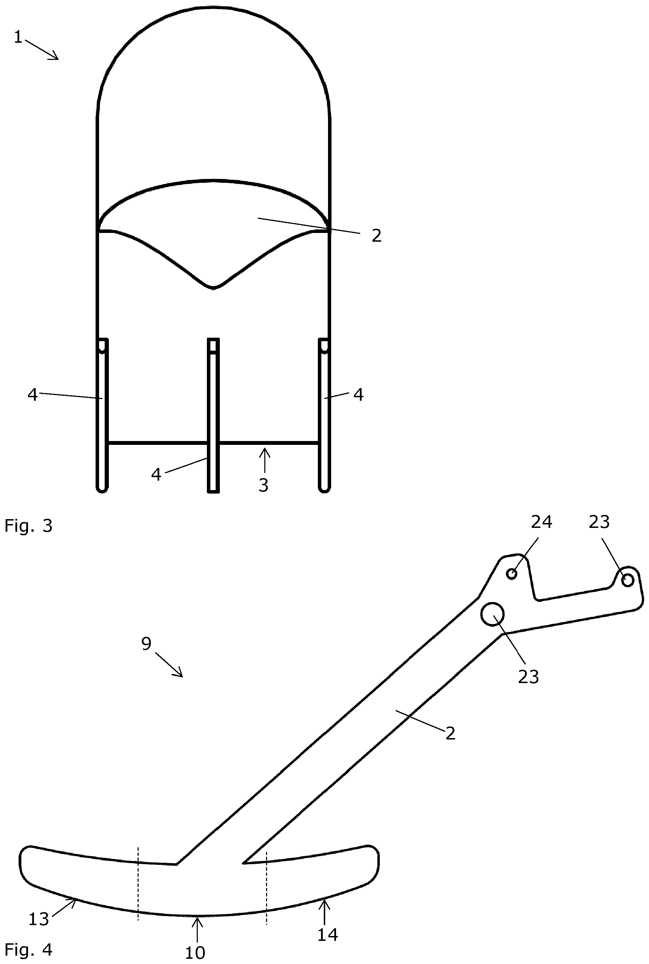

Fig. 3 illustrates the drag head (1) observed from a third angle. To the drag head body (2) are attached three spacers (4) in the zone with the aspiration opening (3).
The space for air flow as described in respect of Fig. 1 is illustrated in front of the aspiration opening (3).
Fig. 4 illustrates a slide shoe (9) observed perpendicular to the movement direction during application. The slide shoe (9) has a first sliding area (10), a second sliding area (13) and a third sliding area (14) each sliding area being facing the surface of a meat product during application. A fixing arm (28) makes it capable to mount the slide shoe (9) such that the sliding areas (10, 13, 14) and the fixing arm (28) can perform resilient movement during application. Fastening apertures (23) are shown where one (the large) aperture can be used for pivotally fastening the slide shoe (9) and the other apertures (the small ones) can be used for means forcing the slide shoe (9) to a starting position when no force is applied upon the first sliding area (10), second sliding area (13) and/or third sliding area (14). The second sliding area (13) and third sliding area (14) are bending slightly upward (towards the fixing arm (21)) from the first sliding area (10). The sliding area along the second sliding area (13), the first sliding area (10) and the third sliding area (14) is curved without any sharp edges in the curvature and hereby securing the slide shoe (9) slides across the meat product surface during application and does not stick to the meat product surface.

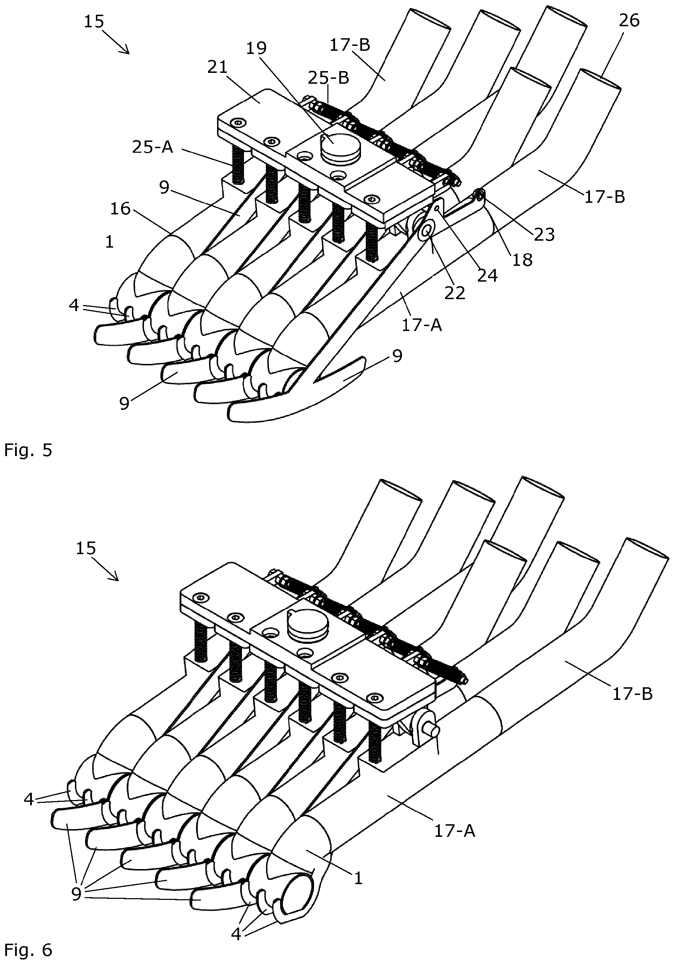

Fig. 5 illustrates an aspiration means (15) with 5 drag heads (1). The aspiration means (15) may comprise any number of drag heads (1) with spacers (4) and slide shoes (9) between the drag heads (1). Each drag head (1) is connected to a suction tube (17) which may be of a hygienic material such as metal in the part (17-A) nearest the drag head (1) and may be of a flexible material a part (17-B) further away from the drag head (1). The two parts of the suction tube (17) may be connected at a suction tube joint (18). The suction tubes (17) are connected to a fixing bar (21) in a movable manner where resilient connections (25-A) in one part of the fixing bar (21) secure the suction tubes (17) are pushed to a start position when no or little pressure is applied to a drag head (1). In this illustration a slide shoe (9) is exposed and illustrated is a pivot (22) for connecting the slide shoe (9) to the fixing bar (21) and resilient connections (25-B) in the back of the fixing bar (21) for pulling the slide shoe (9) to a start position when no or little pressure is applied to the slide shoe (9). Illustrated is also an aperture (24) for a stopper, where the stopper can be a pin or small shaft (not illustrated) which will aim at the fixing bar (21) securing the slide shoe (9) cannot move downward in respect of a start position. The suction tubes (17) are only illustrated for a part of the system, however, the outlet (26) should be connected to a vacuum pump (not illustrated). Each suction tube (17) may be connected to a vacuum pump or the illustrated suction tubes (17) may be connected into fewer suction tubes at an appropriate distance from the drag heads (1) securing the correct vacuum in each drag head (1).
Fig. 6 illustrates an aspiration means (15) with 6 drag heads (1). For explanation see text in respect of Fig. 5. This is a preferred aspiration means (15) with each slide shoes (9) located between two drag heads (1) and with a total width of about 30-35 cm which is suitable for treating most pork belly pieces by passing the aspiration means (15) a single time along the belly piece obtained from pigs with a slaughter weight of about 80-120 kg.

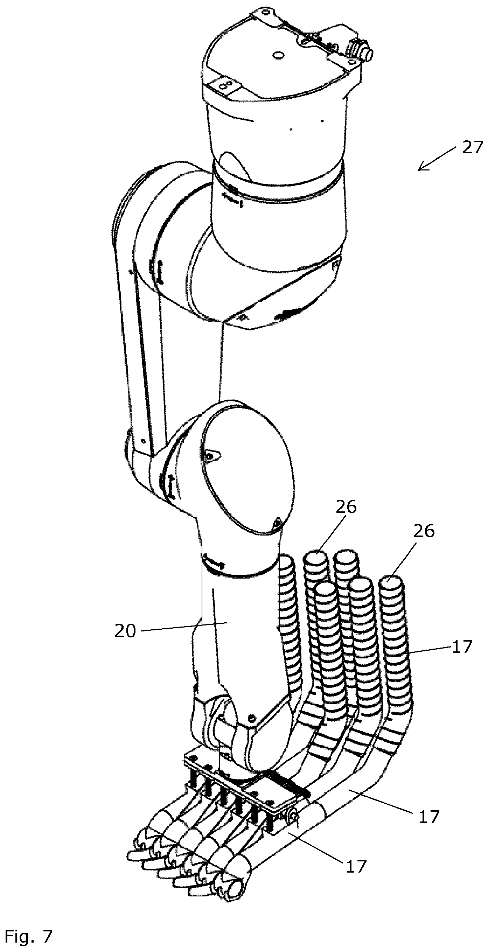

Fig. 7 illustrates an automatic vacuum cleaning system (27). The aspiration means (15) of Fig. 6 is connected to an industrial robot (20) at the management coupling. The robot (20) is illustrated located above the aspiration means (15) giving space for conveyor belt(s) (not illustrated) transporting meat pieces to be treated and if required operators performing other operations close to the automatic vacuum cleaning system (27). The suction tubes (17) are illustrated in a longer form than in Fig. 6 and each with a flexible tube towards the outlets (26), which should be connected to a vacuum producing system.

### List of reference signs

In the figures, identical structures, elements or parts that appear in more than one figure are generally labeled with the same numeral in all the figures in which they appear.
1. Drag head
2. Drag head body
3. Aspiration opening
4. Spacer
5. Resting area of spacer
6. First spacing section
7. Second spacing section
8. Third spacing section
9. Slide shoe
10. First sliding area
11. Drag head housing
12. Outlet
13. Second sliding area
14. Third sliding area
15. Aspiration means
16. Drag head coupling
17. Suction tube
18. Suction tube joint
19. Management coupling
20. Industrial robot
21. Fixing bar
22. Pivot
23. Fastening apertures
24. Aperture for stopper
25. Resilient connection
26. Outlet of suction tube
27. Automatic vacuum cleaning system
28. Fixing arm

## Claims

1. A drag head (1) for a vacuum cleaner for aspirating undesirable material from a surface of a meat product, said drag head comprising:
a. a drag head body (2);
b. an aspiration opening (3) or in-let opening in said drag head body (2);
c. at least one spacer (4) with a resting area (5), said spacer (4) being connected to said drag head body (2) in front of and/or alongside said aspiration opening (3) and with said resting area (5) located away from said aspiration opening (3) such that said resting area (5) can rest on a meat product surface during application; and which drag head is further **characterised by** comprising:
d. at least one slide shoe (9) with a sliding part comprising a first sliding area (10), said slide shoe (9) being arranged besides said drag head body (2) such that at least part of the first sliding area (10) is substantially parallel to at least a part of said resting area (5) of said spacer (4);
wherein said slide shoe (9) is movable in a direction substantially perpendicular to said resting area (5) of said spacer (4).

2. The drag head (1) according to claim 1, wherein said drag head body (2) comprises the following features:
• a drag head housing (11) with an outline which is a truncated cylinder;
• said truncation of said drag head housing (11) constitute said aspiration opening (3);
• the even planes of said truncated cylinder comprises side parts of said drag head body; and
• an outlet opening (12) substantially opposite of said aspiration opening (3) or in-let opening.

3. The drag head (1) according to either one of claims 1-2, wherein said aspiration opening (3) comprises the following features:
• a length of between 5 and 50 mm, such as between 10 and 40 mm, e.g. between 15 and 30 mm, such as between 20 and 25 mm, e.g. about 22 mm, and wherein said length is parallel to the transport direction during application of the drag head (1);
• a width of between 100 and 10 mm, such as between 90 and 15 mm, e.g. between 80 and 20 mm, such as between 70 and 25 mm, e.g. between 60 and 25 mm, such as between 50 and 30 mm, e.g. between 45 and 35 mm, such as about 40 mm, and wherein said width is perpendicular to the transport direction during application of the drag head (1);
• said aspiration opening (3) is a four-sided opening when observed perpendicularly to a rectangle produced from the sides of the aspiration opening (3), and each side along the opening is in similar level; and
• said aspiration opening (3) is divided into a number of sub-openings by said at least one spacer (4) and wherein said sub-openings each has a length corresponding to the length of the aspiration opening (3) and said sub-openings each has a width which is less than half the width of the aspiration opening (3) and said width of said sub-openings is between 4 and 20 mm, such as between 5 and 17 mm, e.g. between 6 and 15 mm, such as between 7 and 13 mm, e.g. between 8 and 11 mm, such as between 8 and 10 mm, e.g. about 9 mm.

4. The drag head (1) according to any one of the preceding claims, wherein said spacer (4) comprises the following features:
• said resting area (5) being plane;
• said resting area having a length corresponding at least to said aspiration opening (3) length;
• said spacer (4) being at least 2 mm in height, such as at least 4 mm, e.g. at least 6 mm, such as at least 8 mm, e.g. at least 10 mm, creating a corresponding height of space between said aspiration opening (3) and a meat product surface during application; and
• said spacer (4) having at least one rounded part located along and outside of a rounded part of said drag head body (2).

5. The drag head (1) according to any one of the preceding claims, wherein said slide shoe (9) comprises the following features:
• said slide shoe comprising a fixing arm (28) connected to a sliding part with said sliding areas (10, 13, 14);
• said slide shoe (9) being located beside at least one of said drag head (1) without being fastened directly to said drag head (1) such that said slide shoe (9) is capable of performing a resilient movement perpendicular to the transport direction during application;
• said slide shoe (9) having a total length being at least twice the length of the resting area (5) of said spacer (4);
• said slide shoe (9) having a first sliding area (10) being parallel to the resting area (5) of said spacer (4) and a second sliding area (13) in a first end of said first sliding area (10) and a third sliding area (14) in a second end of said first sliding area (19);
• said second sliding area (13) and said third sliding area (14) are slightly bending towards said fixing arm (28); and
• the total length of said sliding part is at least 6 cm, such as between 9 and 11 cm.

6. An aspiration means (15) for a vacuum cleaner for aspirating undesirable material from a meat product, said aspiration means (15) is **characterised by** comprising:
a. at least one drag head (1) according to any one of the claims 1 to 5, such as at least two drag heads (1);
b. at least one drag head coupling (16) for connecting the at least one drag head (1) to at least one suction tube (17);
c. at least one suction tube joint (18) for joining two sections (17-A, 17-B) of suction tubes;
d. at least one fixing bar (21) for joining at least two drag heads (1) or at least two suction tubes (17) where each suction tube (17) is connected to a drag head (1); and
e. at least one management coupling (19) for connecting the at least one drag head (1) each with a suction tube (17) to an industrial robot (20).

7. The aspiration means (15) according to claim 6, wherein:
• said slide shoe (9) comprising a fixing arm (28) being fixed to said fixing bar (21), to said suction tube (17) or to said drag head (1) by a pivot (22) making the slide shoe capable of performing a resilient movement;
• said fixing bar (21) being fixed in a non-moving position holding said at least drag heads (1) or said at least two suction tubes (17) next to each other and with a predetermined distance between said at least two drag heads (1) or said at least two suction tubes (17);
• said fixing bar (21) being located above said at least two drag heads (1) or said at least two suction tubes (17);
• said at least two drag heads (1) or said at least two suction tubes (17) being connected to said fixing bar (21) by a resilient connection such that each of said at least two drag heads (2) or suction tubes (17) are capable of resilient movement perpendicular to the movement direction during application; and
• said at least one management coupling (19) is located at said fixing bar (21).

8. An automatic vacuum cleaning system (27) for aspirating undesirable material from a meat product, which automatic vacuum cleaning system (27) is **characterised by** comprising:
at least one aspiration means (15) according to claim 6 or 7, and an industrial robot (20);
at least one trigger system for determining and signalling the presence of a meat product to be treated; and
a processor comprising an algorithm determining the movement pattern of the at least one drag head (1) during treatment of said meat product.

9. A method for removing loose material from the surface of a carcass or meat piece, which method is **characterised by** comprising the subsequent steps of:
a. providing an aspiration means (15) according to claim 6 or 7 or an automatic vacuum cleaning system (27) according to claim 8 or 9;
b. positioning a carcass or meat piece at a handling area in proximity to said aspiration means (15) or of said automatic vacuum cleaning system (27); and
c. removing loose material from the surface of said carcass or meat piece by guiding the at least one drag head (1) one or more times along the surface of said carcass or meat piece with a vacuum suction in said drag head (1) and hereby removing loose material from the surface of said carcass or meat piece.

10. Use of the drag head (1) according to any one of the claims 1 to 5, or of the aspiration means (15) according to claim 6 or 7, or of the automatic vacuum cleaning system (27) according to claim 8 or 9, in the method according to claim 9.

## Patentansprüche

1. Schleppkopf (1) für einen Staubsauger zum Absaugen von unerwünschtem Material von einer Oberfläche eines Fleischprodukts, wobei der Schleppkopf umfasst:
a. einen Schleppkopfkörper (2);
b. eine Aspirationsöffnung (3) oder eine Einlassöffnung in dem Schleppkopfkörper (2);
c. mindestens einen Abstandshalter (4) mit einem Ruhebereich (5), wobei der Abstandshalter (4) mit dem Schleppkopfkörper (2) vor und/oder neben der Aspirationsöffnung (3) und mit dem Ruhebereich (5) verbunden ist von der Aspirationsöffnung (3) entfernt angeordnet sein, so dass der Ruhebereich (5) während des Auftragens auf einer Fleischproduktoberfläche ruhen kann; und welcher Schleppkopf weiter **gekennzeichnet ist durch**:
d. mindestens einen Gleitschuh (9) mit einem Gleitteil, der einen ersten Gleitbereich (10) umfasst, wobei der Gleitschuh (9) neben dem Schleppkopfkörper (2) so angeordnet ist, dass mindestens ein Teil des ersten Gleitbereichs (10) ist im wesentlichen parallel zu mindestens einem Teil des Ruhebereichs (5) des Abstandshalters (4);
wobei der Gleitschuh (9) in einer Richtung beweglich ist, die im Wesentlichen senkrecht zu dem Ruhebereich (5) des Abstandshalters (4) ist.

2. Schleppkopf (1) nach Anspruch 1, wobei der Schleppkopfkörper (2) die folgenden Merkmale umfasst:
• ein Schleppkopfgehäuse (11) mit einem Umriss, bei dem es sich um einen Zylinderstumpf handelt;
• das Abschneiden des Schleppkopfgehäuses (11) die Ansaugöffnung (3) da rstellt;
• die geraden Ebenen des Zylinderstumpfes umfassen Seitenteile des Schleppkopfkörpers; und
• eine Auslassöffnung (12), die der Ansaugöffnung (3) oder der Einlassöffnung im Wesentlichen gegenüberliegt.

3. Schleppkopf (1) nach einem der Ansprüche 1-2, wobei die Aspirationsöffnung (3) die folgenden Merkmale umfasst:
• eine Länge zwischen 5 und 50 mm, z. B. zwischen 10 und 40 mm, z. zwischen 15 und 30 mm, wie zwischen 20 und 25 mm, z. etwa 22 mm, und wobei die Länge während des Aufbringens des Schleppkopfes (1) parallel zur Transportrichtung ist;
• eine Breite zwischen 100 und 10 mm, z. B. zwischen 90 und 15 mm, z. zwischen 80 und 20 mm, wie zwischen 70 und 25 mm, z. zwischen 60 und 25 mm, wie zwischen 50 und 30 mm, z. zwischen 45 und 35 mm, wie etwa 40 mm, und wobei die Breite während des Aufbringens des Schleppkopfes (1) senkrecht zur Transportrichtung ist;
• die Aspirationsöffnung (3) ist eine vierseitige Öffnung, wenn sie senkrecht zu einem Rechteck betrachtet wird, das von den Seiten der Aspirationsöffnung (3) erzeugt wird, und jede Seite entlang der Öffnung befindet sich in einer ähnlichen Höhe; und
• die Aspirationsöffnung (3) ist durch den mindestens einen Abstandshalter (4) in eine Anzahl von Unteröffnungen unterteilt, wobei die Unteröffnungen jeweils eine Länge aufweisen, die der Länge der Aspirationsöffnung (3) und der Unteröffnung entspricht Öffnungen haben jeweils eine Breite, die weniger als die Hälfte der Breite der Aspirationsöffnung (3) beträgt, und die Breite der Unteröffnungen liegt zwischen 4 und 20 mm, wie beispielsweise zwischen 5 und 17 mm zwischen 6 und 15 mm, wie zwischen 7 und 13 mm, z. zwischen 8 und 11 mm, wie zwischen 8 und 10 mm, z. etwa 9 mm.

4. Schleppkopf (1) nach einem der vorhergehenden Ansprüche, wobei der Abstandshalter (4) die folgenden Merkmale umfasst:
• der Ruhebereich (5) eben ist;
• der Ruhebereich eine Länge aufweist, die mindestens der Länge der Aspirationsöffnung (3) entspricht;
• der Abstandshalter (4) hat eine Höhe von mindestens 2 mm, wie z. B. mindestens 4 mm, z. mindestens 6 mm, wie mindestens 8 mm, z. mindestens 10 mm, wodurch während der Anwendung eine entsprechende Höhe des Raums zwischen der Aspirationsöffnung (3) und einer Fleischproduktoberfläche erzeugt wird; und
• der Abstandshalter (4) weist mindestens einen abgerundeten Teil auf, der sich entlang und außerhalb eines abgerundeten Teils des Schleppkopfkörpers (2) befindet.

5. Zugkopf (1) nach einem der vorhergehenden Ansprüche, wobei der Gleitschuh (9) die folgenden Merkmale umfasst:
• den Gleitschuh einen Befestigungsarm (28) umfasst, der mit einem Gleitteil mit den Gleitbereichen (10, 13, 14) verbunden ist;
• der Gleitschuh (9) befindet sich neben mindestens einem der Schleppköpfe (1), ohne direkt an dem Schleppkopf (1) befestigt zu sein, so dass der Gleitschuh (9) eine elastische Bewegung senkrecht zum Transport ausführen kann Richtung während der Anwendung;
• der Gleitschuh (9) hat eine Gesamtlänge, die mindestens doppelt so lang wie die Ruhefläche (5) des Abstandshalters (4).
• der Gleitschuh (9) hat einen ersten Gleitbereich (10), der parallel zum Ruhebereich (5) des Abstandshalters (4) ist, und einen zweiten Gleitbereich (13) in einem ersten Ende des ersten Gleitbereichs (10). und einen dritten Gleitbereich (14) in einem zweiten Ende des ersten Gleitbereichs (19);
• der zweite Gleitbereich (13) und der dritte Gleitbereich (14) sich leicht in Richtung des Befestigungsarms (28) biegen; und
• die Gesamtlänge des Schiebeteils beträgt mindestens 6 cm, z. B. zwischen 9 und 11 cm.

6. Aspirationsmittel (15) für einen Staubsauger zum Absaugen von unerwünschtem Material von einem Fleischprodukt, wobei das Aspirationsmittel (15) **gekennzeichnet ist durch**:
a. mindestens einen Schleppkopf (1) gemäß einem der Ansprüche 1 bis 5, wie mindestens zwei Schleppköpfe (1);
b. mindestens eine Schleppkopfkupplung (16) zum Verbinden des mindestens einen Schleppkopfes (1) mit mindestens einem Saugrohr (17);
c. mindestens eine Saugrohrverbindung (18) zum Verbinden von zwei Abschnitten (17-A, 17-B) von Saugrohren;
d. mindestens eine Befestigungsstange (21) zum Verbinden von mindestens zwei Schleppköpfen (1) oder mindestens zwei Saugrohren (17), wobei jedes Saugrohr (17) mit einem Schleppkopf (1) verbunden ist; und
e. mindestens eine Managementkupplung (19) zum Verbinden des mindestens einen Schleppkopfes (1) mit jeweils einem Saugrohr (17) mit einem Industrieroboter (20).

7. Aspirationsmittel (15) nach Anspruch 6, wobei:
• der Gleitschuh (9) umfasst einen Befestigungsarm (28), der an der Befestigungsstange (21), am Saugrohr (17) oder am Zugkopf (1) durch einen Drehpunkt (22) befestigt ist, wodurch der Gleitschuh fähig wird eine elastische Bewegung auszuführen;
• die Befestigungsstange (21) ist in einer nicht beweglichen Position fixiert und hält die mindestens Schleppköpfe (1) oder die mindestens zwei Saugrohre (17) nebeneinander und mit einem vorbestimmten Abstand zwischen den mindestens zwei Schleppköpfen (1) oder mindestens zwei Saugrohre (17);
• die Befestigungsstange (21) befindet sich über den mindestens zwei Schleppköpfen (1) oder den mindestens zwei Saugrohren (17);
• wobei die mindestens zwei Schleppköpfe (1) oder die mindestens zwei Saugrohre (17) durch eine elastische Verbindung mit der Befestigungsstange (21) verbunden sind, so dass jeder der mindestens zwei Schleppköpfe (2) oder Saugrohre (1) 17) während der Anwendung eine elastische Bewegung senkrecht zur Bewegungsrichtung ausführen können; und
• die mindestens eine Managementkupplung (19) befindet sich an der Befestigungsstange (21).

8. Automatisches Staubsaugersystem (27) zum Absaugen von unerwünschtem Material aus einem Fleischprodukt, wobei das automatische Staubsaugersystem (27) **gekennzeichnet ist durch**:
mindestens ein Aspirationsmittel (15) nach Anspruch 6 oder 7 und einen Industrieroboter (20);
mindestens ein Auslösesystem zum Bestimmen und Signalisieren des Vorhandenseins eines zu behandelnden Fleischprodukts; und
einen Prozessor, der einen Algorithmus umfasst, der das Bewegungsmuster des mindestens einen Schleppkopfes (1) während der Behandlung des Fleischprodukts bestimmt.

9. Verfahren zum Entfernen von losem Material von der Oberfläche eines Schlachtkörpers oder Fleischstücks, wobei dieses Verfahren **dadurch gekennzeichnet ist, dass** es die folgenden Schritte umfasst:
a. bereitstellen eines Absaugmittels (15) nach Anspruch 6 oder 7 oder eines automatischen Staubsaugersystems (27) nach Anspruch 8 oder 9;
b. positionieren eines Schlachtkörpers oder Fleischstücks in einem Handhabungsbereich in der Nähe der Aspirationseinrichtung (15) oder des automatischen Staubsaugersystems (27); und
c. entfernen von losem Material von der Oberfläche des Schlachtkörpers oder Fleischstücks durch einmaliges oder mehrmaliges Führen des mindestens einen Schleppkopfs (1) entlang der Oberfläche des Schlachtkörpers oder Fleischstücks mit einem Vakuumsauger in dem Schleppkopf (1) und hiermit Entfernen loses Material von der Oberfläche des Schlachtkörpers oder Fleischstücks.

10. Verwendung des Schleppkopfes (1) nach einem der Ansprüche 1 bis 5 oder des Aspirationsmittels (15) nach Anspruch 6 oder 7 oder des automatischen Staubsaugersystems (27) nach Anspruch 8 oder 9 in dem Verfahren nach Anspruch 9.

## Revendications

1. Une tête d'aspiration (1) pour un aspirateur pour aspirer un matériau indésirable à partir d'une surface d'un produit carné, ladite tête de traînée comprenant:
a. un corps de tête d'aspiration (2) ;
b. une ouverture d'aspiration (3) ou une ouverture d'entrée dans ledit corps de tête d'aspiration (2);
c. au moins une entretoise (4) avec une zone de repos (5), ladite entretoise (4) étant reliée audit corps de tête d'aspiration (2) devant et/ou le long de ladite ouverture d'aspiration (3) et avec ladite zone de repos (5) situé à l'écart de ladite ouverture d'aspiration (3) de telle sorte que ladite zone de repos (5) puisse reposer sur une surface de produit carné pendant l'application; et quelle tête de traînée est en outre **caractérisée en ce qu'**elle comprend:
d. au moins un patin de glissement (9) avec une partie coulissante comprenant une première zone de glissement (10), ledit patin de glissement (9) étant agencé à côté dudit corps de tête d'aspiration (2) de telle sorte qu'au moins une partie de la première zone de glissement (10) est sensiblement parallèle à au moins une partie de ladite zone de repos (5) de ladite entretoise (4);
dans lequel ledit patin coulissant (9) est mobile dans une direction sensiblement perpendiculaire à ladite zone de repos (5) de ladite entretoise (4).

2. Tête d'aspiration (1) selon la revendication 1, dans laquelle ledit corps de tête d'aspiration (2) comprend les caractéristiques suivantes:
• un boîtier de tête d'aspiration (11) avec un contour qui est un cylindre tronqué;
• ladite troncature dudit logement de tête d'aspiration (11) constitue ladite ouverture d'aspiration (3);
• les plans pairs dudit cylindre tronqué comprennent des parties latérales dudit corps de tête de traînée; et
• une ouverture de sortie (12) sensiblement opposée à ladite ouverture d'aspiration (3) ou ouverture d'entrée.

3. Tête d'aspiration (1) selon l'une quelconque des revendications 1 à 2, dans laquelle ladite ouverture d'aspiration (3) comprend les caractéristiques suivantes:
• une longueur comprise entre 5 et 50 mm, telle qu'entre 10 et 40 mm, par ex. entre 15 et 30 mm, comme entre 20 et 25 mm, par ex. environ 22 mm, et dans lequel ladite longueur est parallèle à la direction de transport pendant l'application de la tête d'aspiration (1);
• une largeur comprise entre 100 et 10 mm, telle qu'entre 90 et 15 mm, par ex. entre 80 et 20 mm, comme entre 70 et 25 mm, par ex. entre 60 et 25 mm, comme entre 50 et 30 mm, par ex. entre 45 et 35 mm, par exemple environ 40 mm, et dans lequel ladite largeur est perpendiculaire à la direction de transport pendant l'application de la tête d'aspiration (1) ;
• ladite ouverture d'aspiration (3) est une ouverture à quatre côtés lorsqu'elle est observée perpendiculairement à un rectangle produit à partir des côtés de l'ouverture d'aspiration (3), et chaque côté le long de l'ouverture est à un niveau similaire; et
• ladite ouverture d'aspiration (3) est divisée en un certain nombre de sous-ouvertures par ladite au moins une entretoise (4) et dans lequel lesdites sous-ouvertures ont chacune une longueur correspondant à la longueur de l'ouverture d'aspiration (3) et desdites sous-ouvertures chacun a une largeur qui est inférieure à la moitié de la largeur de l'ouverture d'aspiration (3) et ladite largeur desdites sous-ouvertures est comprise entre 4 et 20 mm, par exemple entre 5 et 17 mm, par ex. entre 6 et 15 mm, comme entre 7 et 13 mm, par ex. entre 8 et 11 mm, comme entre 8 et 10 mm, par ex. environ 9 mm.

4. Tête d'aspiration (1) selon l'une quelconque des revendications précédentes, dans laquelle ladite entretoise (4) comprend les caractéristiques suivantes:
• ladite zone de repos (5) étant plane;
• ladite zone de repos ayant une longueur correspondant au moins à ladite longueur d'ouverture d'aspiration (3);
• ladite entretoise (4) ayant au moins 2 mm de hauteur, telle qu'au moins 4 mm, par ex. au moins 6 mm, comme au moins 8 mm, par ex. au moins 10 mm, créant une hauteur d'espace correspondante entre ladite ouverture d'aspiration (3) et une surface de produit carné pendant l'application; et
• ladite entretoise (4) ayant au moins une partie arrondie située le long et à l'extérieur d'une partie arrondie dudit corps de tête d'aspiration (2).

5. Tête d'aspiration (1) selon l'une quelconque des revendications précédentes, dans laquelle ledit patin de glissement (9) comprend les caractéristiques suivantes:
• ledit patin coulissant comprenant un bras de fixation (28) relié à une partie coulissante avec lesdites zones coulissantes (10, 13, 14);
• ledit patin de glissement (9) étant situé à côté d'au moins une desdites têtes de traînée (1) sans être fixé directement sur ladite tête d'aspiration (1) de sorte que ledit patin de glissement (9) soit apte à effectuer un mouvement élastique perpendiculaire au transport direction pendant l'application;
• ledit patin coulissant (9) ayant une longueur totale d'au moins deux fois la longueur de la zone de repos (5) de ladite entretoise (4);
• ledit patin de glissement (9) ayant une première zone de glissement (10) étant parallèle à la zone de repos (5) de ladite entretoise (4) et une seconde zone de glissement (13) dans une première extrémité de ladite première zone de glissement (10) et une troisième zone de glissement (14) dans une seconde extrémité de ladite première zone de glissement (19);
• ladite deuxième zone de glissement (13) et ladite troisième zone de glissement (14) sont légèrement fléchies vers ledit bras de fixation (28); et
• la longueur totale de ladite partie coulissante est d'au moins 6 cm, telle qu'entre 9 et 11 cm.

6. Un moyen d'aspiration (15) pour un aspirateur pour aspirer une matière indésirable d'un produit carné, ledit moyen d'aspiration (15) est **caractérisé en ce qu'**il comprend:
a. au moins une tête d'aspiration (1) selon l'une quelconque des revendications 1 à 5, telle qu'au moins deux têtes d'aspiration (1);
b. au moins un accouplement de tête d'aspiration (16) pour connecter la au moins une tête d'aspiration (1) à au moins un tube d'aspiration (17);
c. au moins un joint de tube d'aspiration (18) pour joindre deux sections (17-A, 17-B) de tubes d'aspiration;
d. au moins une barre de fixation (21) pour joindre au moins deux têtes d'aspiration (1) ou au moins deux tubes d'aspiration (17) où chaque tube d'aspiration (17) est relié à une tête d'aspiration (1); et
e. au moins un couplage de gestion (19) pour connecter la au moins une tête d'aspiration (1) avec chacune un tube d'aspiration (17) à un robot industriel (20).

7. Moyens d'aspiration (15) selon la revendication 6, dans lesquels:
• ledit patin de glissement (9) comprenant un bras de fixation (28) étant fixé à ladite barre de fixation (21), audit tube d'aspiration (17) ou à ladite tête d'aspiration (1) par un pivot (22) rendant le patin de glissement capable effectuer un mouvement élastique;
• ladite barre de fixation (21) étant fixée dans une position non mobile maintenant lesdites au moins deux têtes d'aspiration (1) ou lesdits au moins deux tubes d'aspiration (17) l'un à côté de l'autre et avec une distance prédéterminée entre lesdites au moins deux têtes d'aspiration ( 1) ou lesdits au moins deux tubes d'aspiration (17);
• ladite barre de fixation (21) étant située au-dessus desdites au moins deux têtes d'aspiration (1) ou desdits au moins deux tubes d'aspiration (17);
• lesdites au moins deux têtes d'aspiration (1) ou lesdits au moins deux tubes d'aspiration (17) étant reliés à ladite barre de fixation (21) par une connexion élastique de telle sorte que chacune desdites au moins deux têtes d'aspiration (2) ou tubes d'aspiration (17) sont capables d'un mouvement élastique perpendiculaire à la direction du mouvement pendant l'application; et
• ledit au moins un couplage de gestion (19) est situé au niveau de ladite barre de fixation (21).

8. Système de nettoyage automatique par aspiration (27) pour aspirer une matière indésirable d'un produit carné, lequel système de nettoyage automatique par aspiration (27) est **caractérisé en ce qu'**il comprend:
au moins un moyen d'aspiration (15) selon la revendication 6 ou 7, et un robot industriel (20);
au moins un système de déclenchement pour déterminer et signaler la présence d'un produit carné à traiter; et
un processeur comprenant un algorithme déterminant le modèle de mouvement de la au moins une tête d'aspiration (1) pendant le traitement dudit produit carné.

9. Procédé pour enlever des matières en vrac de la surface d'une carcasse ou d'un morceau de viande, lequel procédé est **caractérisé en ce qu'**il comprend les étapes suivantes consistant à:
a. fournir un moyen d'aspiration (15) selon la revendication 6 ou 7 ou un système de nettoyage automatique par aspiration (27) selon la revendication 8 ou 9;
b. positionner une carcasse ou un morceau de viande au niveau d'une zone de manipulation à proximité desdits moyens d'aspiration (15) ou dudit système de nettoyage automatique par aspiration (27); et
c. enlever le matériau en vrac de la surface de ladite carcasse ou morceau de viande en guidant la au moins une tête d'aspiration (1) une ou plusieurs fois le long de la surface de ladite carcasse ou morceau de viande avec une aspiration sous vide dans ladite tête d'aspiration (1) et en retirant ainsi matière en vrac de la surface de ladite carcasse ou morceau de viande.

10. Utilisation de la tête d'aspiration (1) selon l'une quelconque des revendications 1 à 5, ou des moyens d'aspiration (15) selon la revendication 6 ou 7, ou du système de nettoyage automatique par aspiration (27) selon la revendication 8 ou 9, dans le procédé selon la revendication 9.
